# EUROPEAN PATENT APPLICATION

(11) **EP 4 180 684 A1**
(43) Date of publication of application: **17.05.2023**
(21) Application number: 21208090.7
(22) Date of filing: 12.11.2021
(51) Int. Cl.: F16D 65/16, F16D 65/18, F16D 65/22

(54) **BRAKING MEMBER ACTUATING ASSEMBLY, BRAKE ASSEMBLY AND VEHICLE**

(71) Applicant: KNORR-BREMSE Systeme für Nutzfahrzeuge GmbH, 80809 München (DE)
(72) Inventor: PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); NAKAMURA, Tatsuro, 1027 Budapest (HU); HOLLOSI, Mate, 1097 Budapest (HU)

(57) **Abstract**

The present invention relates to a braking member actuating assembly for actuating at least one braking member (3a, 3b) to apply a braking force on at least one brake member (2a, 2b), comprising:
at least one driving member (4a, 4a', 4a") configured to actuate the at least one braking member (3a, 3b), and
at least one driving member driving lever (4c, 4c', 4c", 4d, 4d") operatively connected to or operatively engageable with the at least one driving member (4a, 4a', 4") to drive the at least one driving member (4a, 4a', 4a"),
wherein the braking member actuation assembly (4, 4', 4") is configured to transfer a rotational movement of the at least one driving member driving lever (4c, 4c', 4c", 4d, 4d") about a respective driving member driving lever rotational axis into a rotational movement of the at least one driving member (4a, 4a', 4a") about a respective driving member rotational axis.

## Description

The present invention relates to a braking member actuating assembly for actuating at least one braking member to apply a braking force on at least one brake member, a brake assembly comprising the braking member actuating assembly, and a vehicle comprising the braking member actuating assembly and/or the brake assembly.

In today's commercial vehicles usually a pneumatic actuated disc brake is used as a mechanical friction brake. The disc brake is containing a disc with an attached brake caliper including brake pads and a pneumatic actuator unit. Once the pneumatic actuator is pressurized, a piston inside the actuator is pressing the brake pads inside the caliper from both sides onto the brake disc, for example, via a lever system. Further cooling channels are mounted between the friction surfaces in a brake disc.

Such disc brake assemblies require a lot of installation space. Especially the installation space of upcoming E-axles for electrically driven vehicles, such as electrically driven trucks, may be very high and may get in conflict with the installation space of components of today's disc brake.

Therefore, it is an object of the present invention to provide a braking member actuating assembly, a brake assembly and a vehicle capable of providing a reduced installation space required for the braking member actuating assembly and/or the brake assembly, respectively.

The object is solved by the subject matter of the independent claims. Further aspects of the present invention are subject to the dependent claims.

According to the invention, a braking member actuating assembly for actuating at least one braking member to apply a braking force on at least one brake member comprises at least one driving member configured to actuate the at least one braking member, and at least one driving member driving lever operatively connected to or operatively engageable with the at least one driving member to drive the at least one driving member. The braking member actuation assembly is configured to transfer a rotational movement of the at least one driving member driving lever about a respective driving member driving lever rotational axis into a rotational movement of the at least one driving member about a respective driving member rotational axis.

For example, the at least one brake member may be a brake disc rotatably supported about a rotational axis and the at least one braking member may be a brake pad to be moved towards a radial surface of the brake disc with respect to the rotational axis to apply a respective braking force in accordance with such movement.

To move the at least one braking member towards a surface of the brake member to be braked, the at least one driving member may be configured to actuate the at least one braking member directly or indirectly, e.g. via a brake member transmission assembly. Such brake member transmission assembly may transfer an actuation by the at least one driving member to the at least one braking member and therefore to the at least one brake member.

The driving member is driven by at least one driving member driving lever, wherein the at least one driving member driving lever is rotatably supported about a respective driving member driving lever rotational axis. To transfer the rotational movement of the driving member driving lever to the driving member, the driving member driving lever may be operatively connected to the driving member, e.g. by being integrally formed with the driving member or connected thereto by a form-fit and/or force-fit connection. The driving member driving lever may also be operatively connected to the driving member via intermediate transmission means. Accordingly, the term operatively connected relates to a constant connection or engagement of the driving member driving lever with the driving member. In turn, the term operatively engageable relates to a configuration with the driving member driving lever may be disengaged from the driving member under certain predetermined circumstances. For example, the driving member driving lever may have to provide a certain predetermined rotational and/or translational movement to operatively engage with the driving member directly or indirectly to transfer a further rotational movement to the driving member. This may be advantageous to decouple the driving member driving lever and the driving member for the avoidance of unintentional slight braking actions, e.g. due to vibrations.

Preferably, the driving member driving lever rotational axis of the at least one driving member driving lever operatively connected to the driving member or operatively engaged therewith corresponds to the driving member rotational axis, i.e. the driving member driving lever rotational axis is coaxially aligned with the driving member rotational axis. Alternatively, the driving member driving lever rotational axis may be offset from the driving member rotational axis. Such offset may provide a parallel arrangement of the driving member driving lever rotational axis and the driving member rotational axis or a skewed arrangement or an arrangement with the driving member driving lever rotational axis intersecting the driving member rotational axis. Such offset may allow the implementation of intermediate transmission means, such as gears as described later, to provide a predetermined transmission ratio with respect to the rotational movement of the at least one driving member driving lever and the corresponding movement of the at least one driving member.

As the at least one driving member driving lever transfers its rotational movement into a rotational movement of the at least one driving member, the installation space of the braking member actuating assembly may be at least reduced in an axial direction with respect to the driving member driving lever rotational axis and the driving member rotational axis. In other words, the extension of the at least one driving member driving lever and the at least one driving member in the respective axial directions may be designed with respect to stability criteria and/or to bridge distances required for respective functional interactions but does not have to consider translational movement extension length in such directions.

In some embodiments, the at least one driving member comprises a rod, preferably extending in parallel to, more preferably coaxially with the driving member rotational axis. The at least one driving member comprises or is operatively connected to at least one driving member transmission, preferably a gear, a wedge or a cam, to convert the rotational movement of the at least one driving member into an actuation of the at least one braking member.

The rod may be, for example, a shaft or bar. Preferably, the rod extends in parallel or coaxially with the driving member rotational axis to allow a reduction of installation space in at least a radial direction with respect to the driving member rotational axis.

The driving member and the rod, respectively, may comprise at least partially a contour to directly or indirectly actuate the at least one braking member upon rotational movement of the driving member and the rod, respectively. In such configuration, the contour as driving member transmission is integrally formed. Alternatively, a respective driving transmission member may be a separate component operatively connected to the rod. The operative connection may be a direct connection or an indirect connection via further transmission transfer means. Preferably, the driving member transmission comprises a respective actuating contour on a radial and/or axial surface thereof with respect to the driving member rotational axis to convert the rotational movement of the at least one driving member into an actuation of the at least one braking member.

For example, the driving member transmission may be a gear with teeth arranged on a radial and/or axial surface of the gear with respect to the driving member rotational axis, preferably a spur gear with the teeth arranged circumferentially on an axial surface of the spur gear with respect to the driving member rotational axis. Such gear may drive the at least one braking member or a respective brake member transmission assembly upon rotation to move the at least one braking member towards the at least one brake member. In an exemplary embodiment, the gear as driving member transmission drives a corresponding gear of a brake member transmission assembly, wherein the rotational movement of the gear of a brake member transmission assembly actuates the at least one braking member to be moved towards the at least one brake member, preferably by converting the rotational movement of the gear of a brake member transmission assembly into a translational movement of the at least one braking member. This may, for example, be accomplished by a brake member transmission assembly comprising a ball ramp assembly.

Alternatively, the driving member transmission may be a wedge with varying thickness in an axial direction and/or flank angle in a radial direction with respect to the driving member rotational axis along a circumferential direction. For example, the rotation of such wedge about the driving member rotational axis with the at least one braking member or a respective brake member transmission member in contact with a radial flank of the wedge with respect to the driving member rotational axis causes the at least one braking member or the brake member transmission member respectively to move towards the at least one brake element with increased thickness in the axial direction and/or increased flank angle in the radial direction.

In a further alternative, the driving member transmission may be a cam. The cam provides a change of the effective height of the cam in the radial direction with respect to the driving member rotational axis with respect to a predetermined reference point upon rotation about the driving member rotational axis. The changing height of the cam in the radial direction upon rotation thereof may actuate the at least one braking member, for example, to tilt towards the at least one brake member. Alternatively, the cam may actuate a lever mechanism, such as a toggle lever or knee lever mechanism, to move the at least one braking member towards the at least one brake member.

Any of the above contours may only be comprised by the driving member transmission to the extent required. For example, if a transmission by the driving member transmission is only intended over a certain angular range with respect to a rotational movement of the driving member about the driving member rotational axis, the contour may only be provided over such range. However, a continuous contour over the whole circumference of the axial and/or radial surface of the driving member transmission may allow a continuous transmission over any angle and an easy assembling and/or design, in particular in view of the use of standard components.

In some embodiments, the at least one driving member driving lever comprises at least one driving member driving lever transmission member, preferably at least one driving member driving lever gear, and the at least one driving member comprises at least one driving member transmission receiving member, preferably at least one driving member gear in accordance with a predetermined transmission ratio.

As already addressed with respect to the driving member driving lever rotational axis not being coaxially arranged with the driving member rotational axis, the at least one driving member driving lever comprises at least one driving member driving lever transmission member to transmit an actuation of the at least one driving member driving lever to at least one driving member transmission receiving member with a predetermined transmission ratio, preferably of more than 1. However, the transmission ratio may be also less than 1. The driving member driving lever transmission member may be non-rotatably attached to or comprised by the at least one driving member driving lever to directly rotate in accordance with a rotation of the at least one driving member driving lever.

Preferably, the at least one driving member driving lever transmission member is configured as or comprises at least one driving member driving lever gear. The at least one driving member driving lever gear may be a spur gear with the teeth extending circumferentially in a radial direction with respect to the driving member driving lever rotational axis. Correspondingly, the at least one driving member transmission receiving member may be at least one driving member gear, for example a corresponding spur gear, with the teeth extending in a plane to engage with the teeth of the at least one driving member driving lever gear. The diameter or number of teeth, respectively, of the at least one driving member driving lever gear and the at least one driving member gear are selected as per the transmission ratio to be achieved.

In some embodiments, the braking member actuating assembly further comprises at least one driving member driving lever actuating assembly configured to drive the at least one driving member driving lever about the driving member driving lever rotational axis.

The at least one driving member driving lever actuating assembly configured to drive the at least one driving member driving lever about the driving member driving lever rotational axis may be, for example, an electric motor or another type of rotary drive to rotate the at least one driving member driving lever about the driving member driving lever rotational axis. Alternatively, the at least one driving member driving lever actuating assembly may be a translational driving device configured to pull or push the at least one driving member driving lever to rotate about the driving member driving lever rotational axis.

In some embodiments, the at least one driving member driving lever actuating assembly comprises a piston actuator, comprising at least one driving member driving lever actuator piston with one end configured to drive the at least one driving member driving lever and the other end forming a driving member driving lever actuator piston area configured to be guided in a driving member driving lever actuator piston cylinder.

Accordingly, the at least one driving member driving lever actuating assembly comprises the piston actuator as translational driving device to rotationally drive the at least one driving member driving lever about the driving member driving lever rotational axis by being pulled or pushed by the piston actuator. The piston actuator comprises at least one driving member driving lever actuator piston, preferably pneumatically, hydraulically or electrically driven, to drive the at least one driving member driving lever in accordance with a relative movement of the at least one driving member driving lever actuator piston with respect to the driving member driving lever actuator piston cylinder. For such relative movement, the driving member driving lever actuator piston provides a longitudinal extension corresponding to a translational movement direction with a driving member driving lever actuator piston area extending radially therefrom. The driving member driving lever actuator piston area guides the driving member driving lever actuator piston within a driving member driving lever actuator piston cylinder in the translational movement direction. The driving member driving lever actuator piston area may be further configured to separate the inner volume of the driving member driving lever actuator piston cylinder in a first volume with the driving member driving lever actuator piston at least partially extending therein and a second volume opposed thereto in the translational movement direction.

For example, the second volume may be pressurized to move the driving member driving lever actuator piston in an extended position in the translational movement direction. In turn, the first volume may be pressurized to move the driving member driving lever actuator piston in a retracted position in the translational movement direction.

In some embodiments, the at least one driving member driving lever actuating assembly comprises at least one driving member driving lever actuator biasing member configured to bias the at least one driving member driving lever actuator piston in a retracted position decreasing the distance between the driving member driving lever actuator piston cylinder of the at least one driving member driving lever actuating assembly and the at least one driving member driving lever. Alternatively, the at least one driving member driving lever actuator biasing member may be configured to bias the at least one driving member driving lever actuator piston in an extended position increasing the distance between the driving member driving lever actuator piston cylinder of the at least one driving member driving lever actuating assembly and the at least one driving member driving lever.

Accordingly, instead of or alternatively to, for example, pressurizing the first and second volume of the driving member driving lever actuator piston cylinder for a bidirectional movement of the driving member driving lever actuator piston, a driving member driving lever actuator biasing member may be arranged in the first and/or second volume acting in the translational movement direction.

For example, the driving member driving lever actuator biasing member may be a compression spring arranged in the second volume to bias the driving member driving lever actuator piston in the extended position. When the first volume is pressurized up to a resulting force exceeding the counter force of the compression spring, the driving member driving lever actuator piston is moved in the retracted position. In turn, the driving member driving lever actuator biasing member may be a tension spring arranged in the first volume, for example, in operative connection with the driving member driving lever actuator piston area and an opposed portion of the second volume in the translational movement direction to bias the driving member driving lever actuator piston in the extended position. In such configuration, the first volume may be pressurized up to a resulting force exceeding the counter force of the tension spring to move the driving member driving lever actuator piston in the retracted position. If the extended position of the driving member driving lever actuator piston corresponds to a braking action, the above configurations provide a passive braking concept. In other words, the braking action takes place by the at least one driving member driving lever actuator biasing member while the release of such braking action requires the at least one driving member driving lever actuating assembly to be energized, e.g. by pressurization of a respective volume. In turn, if the extended position of the driving member driving lever actuator piston corresponds to a release of a braking action, the above configurations provide an active braking concept. In other words, the braking action takes place by the at least one driving member driving lever actuating assembly to being energized, e.g. by pressurization of a respective volume.

In alternative configurations, the second volume may be energized by pressure with the compression spring arranged in the first volume or the tensile spring being arranged in the second volume. Accordingly, the respective driving member driving lever actuator biasing member as compression spring or tensile spring biases the driving member driving lever actuator piston in the retracted position. Upon energizing, i.e. pressurizing, the second volume moves the driving member driving lever actuator piston in the extended position when exceeding the counter force by the driving member driving lever actuator biasing member. In such configurations, the reverse principles with respect to the passive and active braking concepts as described above apply. In other words, if the extended position of the driving member driving lever actuator piston corresponds to a braking action, the alternative configurations provide an active braking concept. In turn, if the retracted position of the driving member driving lever actuator piston corresponds to a braking action, the alternative configurations provide a passive braking concept.

In some embodiments, the braking member actuating assembly comprises at least one first driving member driving lever actuating assembly and at least one second driving member driving lever actuating assembly.

For example, the at least one driving member driving lever may thereby be actuated differently depending on the concrete configuration of the at least one first driving member driving lever actuating assembly and at least one second driving member driving lever actuating assembly and/or their concrete arrangement within the braking member actuating assembly. However, the at least one driving member driving lever may be actuated substantially the same by the at least one first driving member driving lever actuating assembly and at least one second driving member driving lever actuating assembly for redundancy reasons.

In some embodiments, both of the at least one first driving member driving lever actuating assembly and the at least one second driving member driving lever actuating assembly drive the at least one driving member driving lever, preferably each of which being operatively engageable with or operatively connected to the at least one driving member driving lever in different positions along the at least one driving member driving lever and/or being arranged substantially on different sides of the at least one driving member driving lever.

Here, as in the above example, the at least one first driving member driving lever actuating assembly and at least one second driving member driving lever actuating assembly act on the same at least one driving member driving lever for different actuating characteristics or redundancy reasons. Specifically, each of the at least one first driving member driving lever actuating assembly and at least one second driving member driving lever actuating assembly are operatively engageable with or operatively connected to the at least one driving member driving lever. The operative connection relates to a continuous direct or indirect connection, while the operative engagement may only be available over a certain range of movement of the respective driving member driving lever actuating assembly or driving member driving lever actuating member, respectively. For example, the first and second driving member driving lever actuating assemblies may be configured as piston actuators as previously described. Accordingly, the driving member driving lever actuator piston of the first and second driving member driving lever actuating assembly may be rotationally affixed to the at least one driving member driving lever for an operative connection thereto. Alternatively, the driving member driving lever actuator piston of the first and second driving member driving lever actuating assembly may comprise a catch member only in engagement with the at least one driving member driving lever over a certain range of movement of the driving member driving lever actuator piston.

To apply different actuating characteristics on the at least one driving member driving lever, each of the at least one first driving member driving lever actuating assembly and the at least one second driving member driving lever actuating assembly is operatively engageable with or operatively connected to the at least one driving member driving lever in different positions along the at least one driving member driving lever. Specifically, the engagement or connection is different in a radial distance between such engagement or connection and the driving member driving lever rotational axis to apply a different effective lever arm. However, the different positions may, alternatively or in addition, relate to a difference in the axial position with respect to the driving member driving lever rotational axis. The axial offset may increase the flexibility of arranging the at least one first driving member driving lever actuating assembly and the at least one second driving member driving lever actuating assembly in view of given installation space constraints.

Alternatively or in addition, each of the at least one first driving member driving lever actuating assembly and the at least one second driving member driving lever actuating assembly is arranged substantially on different sides of the at least one driving member driving lever to further enhance the freedom in arranging the at least one first driving member driving lever actuating assembly and the at least one second driving member driving lever actuating assembly. In this context, the term substantially relates to configuration, where, for example, one end of a driving member driving lever actuator piston of a piston actuator as driving member driving lever actuating assembly may extend beyond the at least one driving member driving lever and may therefore be partially arranged on the same side as the other driving member driving lever actuating assembly. However, the at least one first driving member driving lever actuating assembly and the at least one second driving member driving lever actuating assembly are arranged substantially on different sides of the at least one driving member driving lever, specifically according to the main actuating effective portions of the at least one first driving member driving lever actuating assembly and the at least one second driving member driving lever actuating assembly.

In some embodiments, the braking member actuating assembly comprises
- at least one first driving member driving lever operatively connected to or operatively engageable with the at least one driving member and configured to be driven by the at least one first driving member driving lever actuating assembly, and
- at least one second driving member driving lever operatively connected to or operatively engageable with the at least one driving member and configured to be driven by the at least one second driving member driving lever actuating assembly.

Preferably, the at least one first driving member driving lever and the at least one second driving member driving lever form an angle equal to or less than 180°, in particular an acute angle, therebetween with the at least one first driving member driving lever actuating assembly and with the at least one second driving member driving lever actuating assembly being substantially arranged on opposite sides outside the angle formed by the at least one first driving member driving lever and the at least one second driving member driving lever.

Alternatively or in addition, the at least one first driving member driving lever actuating assembly and the at least one second driving member driving lever actuating assembly are preferably operatively engageable with the at least one first driving member driving lever and the at least one second driving member driving lever in different radial distances from the driving member rotational axis.

Accordingly, the at least one driving member is rotatably drivable about the driving member rotational axis by the at least one first driving member driving lever via the at least one first driving member driving lever actuating assembly and by the at least one second driving member driving lever via the at least one second driving member driving lever actuating assembly.

In a configuration with the at least one first driving member driving lever and the at least one second driving member driving lever forming an angle equal to or less than 180°, in particular an acute angle, therebetween and the at least one first driving member driving lever actuating assembly and with the at least one second driving member driving lever actuating assembly being substantially arranged on opposite sides outside the angle, a compact arrangement can be established. In this context, the term substantially also relates to an arrangement wherein some components of the respective driving member driving lever actuating assembly may partially extend within the angle but without significant effect on the functionality or at least with the majority of the driving member driving lever actuating assembly being arranged outside the angle.

For example, with a first piston actuator as the at least one first driving member driving lever actuating assembly and a second piston actuator as the at least one second driving member driving lever actuating assembly, the respective first and second driving member driving lever actuating assemblies may also form an angle of equal to or less than 180°, preferably an actuate angle, represented by the respective translational movement directions. The angles between the at least one first and second driving member driving levers and the at least one first and second driving member driving lever actuating assemblies are opened to opposed sides so that at least the compact design of the braking member actuating assembly may be achieved in a radial direction with respect to the driving member rotational axis.

Alternatively or in addition, the at least one first driving member driving lever actuating assembly and the at least one second driving member driving lever actuating assembly are preferably operatively engageable with the at least one first driving member driving lever and the at least one second driving member driving lever in different radial distances from the driving member rotational axis. Accordingly, different actuating characteristics or transmission characteristics, respectively, may be achieved, specifically with respect to corresponding lever arms.

The at least one first and second driving member driving levers may also be offset from each other in the axial direction with respect to the driving member driving lever rotational axis.

In some embodiments, the at least one first driving member driving lever and the at least one second driving member driving lever are operatively engaged with the at least one driving member in a constant positional relationship to each other or relatively moveable with respect to each other.

With the at least one first driving member driving lever and the at least one second driving member driving lever being operatively engaged with the at least one driving member in a constant positional relationship to each other, constructive efforts may be reduced. Furthermore, a constant positional relationship may allow to use the respective other driving member driving lever actuating assembly as return assembly. For example, if the at least one driving member is moved in one rotational direction about the driving member rotational axis by the at least one first driving member driving lever via the at least one first driving member driving lever actuating assembly, the at least one second driving member driving lever is also moved in such direction due to the constant positional relationship. If the at least one second driving member driving lever is operatively connected to the at least one second driving member driving lever actuating assembly, the at least one second driving member driving lever actuating assembly may allow the driving member to return in the opposite rotational direction. Specifically, the constant positional relationship of the at least one first and second driving member driving levers may allow to automatically bias one of the first and second driving member driving lever actuating assemblies, such as a spring-loaded piston actuator, to at least partially reverse a rotation of the driving member being rotated by the other one of the first and second driving member driving lever actuating assemblies.

However, to avoid the above interaction or to enhance flexibility, the at least one first and second driving member driving levers may be independently moveably with respect to each other.

In alternative embodiments, the at least one first driving member driving lever actuating assembly is configured to drive the at least one driving member driving lever as previously described or the at least one first driving member driving lever as previously described in a braking direction when energized, preferably by pushing or pulling the at least one driving member driving lever or the at least one first driving member driving lever. Further, the at least one second driving member driving lever actuating assembly is configured to drive the at least one driving member driving lever as previously described or the at least one second driving member driving lever as previously described in a braking direction when de-energized, preferably by pulling or pushing the at least one driving member driving lever or the at least one second driving member driving lever.

Analogously to the description of the passive and active braking concept principles, the at least one first driving member driving lever actuating assembly provides an active braking concept by being configured to drive the at least one driving member driving lever or the at least one first driving member driving lever in a braking direction when energized. Driving the at least one driving member driving lever or the at least one first driving member driving lever in a braking direction is preferably executed by pushing or pulling the at least one driving member driving lever or the at least one first driving member driving lever, e.g. by the piston actuator as previously described.

Further, the at least one second driving member driving lever actuating assembly being configured to drive the at least one driving member driving lever or the at least one second driving member driving lever in a braking direction when de-energized provides a passive braking concept.

With respect to pulling or pushing the at least one driving member driving lever or the at least one first or second driving member driving lever, the at least one first driving member driving lever actuating assembly may be configured to provide a pulling action, while the at least one second driving member driving lever actuating assembly may be configured to provide a pushing action, or vice versa.

In some embodiments, the transmission ratio of the at least one first driving member driving lever actuating assembly on the at least one driving member is different from the transmission ratio of the at least one second driving member driving lever actuating assembly on the at least one driving member. Preferably, the transmission ratio by the at least one first driving member driving lever actuating assembly on the at least one driving member is less than the transmission ratio of the at least one second driving member driving lever actuating assembly on the at least one driving member.

Accordingly, the at least one first driving member driving lever actuating assembly may be designed differently from the at least one second driving member driving lever actuating assembly to provide the same actuation of the at least one braking member or may provide a different actuation by the same design.

In another aspect, the present invention relates to a brake assembly, comprising at least one brake member rotationally supported about a rotational axis and connected to a wheel rim, which extends circumferentially around the at least one brake element about the rotational axis. The brake assembly further comprises at least one braking member to apply a braking force on at least one brake element, and at least one braking member actuating assembly as previously described. The at least one driving member and/or the at least one driving member driving lever is/are arranged within a radial distance with respect to the rotational axis which is substantially equal or less than the radius of the wheel rim, preferably in accordance with the outer diameter of the wheel rim, more preferably in accordance with the inner diameter of the wheel rim.

The arrangement of the at least one driving member and/or the at least one driving member driving lever within a radial distance with respect to the rotational axis which is substantially equal or less than the radius of the wheel rim is not restricted to an arrangement physically covered by the wheel rim. In other words, the at least one driving member and/or the at least one driving member driving lever is/are arranged within a virtual cylinder formed by the diameter of the wheel rim. The reference diameter may be the outer diameter or for a more compact arrangement the inner diameter of the wheel rim.

In some embodiments, the braking member actuating assembly comprises the at least one driving member driving lever actuating assembly as previously described. The at least one driving member driving lever actuating assembly is arranged within a radial distance with respect to the rotational axis which is substantially equal to or less than the radius of the wheel rim, preferably in accordance with the outer diameter of the wheel rim, more preferably in accordance with the inner diameter of the wheel rim.

Here, for a more compact design, not only the at least one driving member and/or the at least one driving member driving lever is/are arranged within the virtual cylinder defined by the wheel rim diameter but also at least one driving member driving lever actuating assembly.

In some embodiments, the braking member actuating assembly comprises the at least one driving member driving lever actuating assembly as previously described. The radial extension of the at least one driving member driving lever with respect to the driving member driving lever rotational axis and the extension of the at least one driving member driving lever actuating assembly in the actuation direction to drive the at least one driving member driving lever form an angle of equal to or less than 90°, preferably equal to or less than 70°, more preferably equal to or less than 50°, with the angle being opened towards the rotational axis.

Accordingly, the at least one driving member driving lever actuating assembly is inclined towards the rotational axis of the at least brake element with respect to the at least one driving member driving lever. The radial extension of the braking member actuating assembly with respect to the rotational axis of the at least one brake element may thereby be reduced.

In some embodiments, the braking member actuating assembly comprises the at least one first driving member driving lever actuating assembly and the at least one second driving member driving lever actuating assembly as previously described. The at least one first driving member driving lever actuating assembly is configured to provide a service brake operation and the at least one second driving member driving lever actuating assembly is configured to provide a parking brake operation.

Preferably, the at least one first driving member driving lever actuating assembly provides an active braking concept as previously described to drive the at least one driving member driving lever or the at least one first driving member driving lever in a braking direction for a service brake operation. Similarly, the at least one second driving member driving lever actuating assembly provides preferably a passive braking concept as previously described to drive the at least one driving member driving lever or the at least one first driving member driving lever in a braking direction for a parking brake operation.

Alternatively or in addition, the at least one first driving member driving lever actuating assembly and the at least one second driving member driving lever actuating assembly may be configured to mutually support each other for the same brake operation.

In another aspect, the present invention relates to a vehicle comprising a braking member actuating assembly as previously described and/or a brake assembly as previously described. Preferably, the vehicle is configured as a commercial vehicle, a truck, a trailer, a bus and/or as a combination of a towing vehicle and a trailer. Alternatively or in addition, the vehicle preferably comprises a pure electric, a hybrid or a conventional powertrain.

The braking member actuating assembly and/or the brake assembly are/is advantageously applied for such vehicles according to the characteristic installation space constraints.

Further advantages, aspects and details of the invention are subject to the claims, the following description of exemplary embodiments applying the principles of the invention, and the respective exemplary drawings.
**Figure 1** is a lateral view of a brake assembly comprising a braking member actuating assembly installed on a vehicle as part of a brake system according to an exemplary embodiment of the present invention;
**Figure 2** is a cross-sectional view of the brake assembly according to Figure 1 with respect to a view A-A as indicated in Figure 1;
**Figure 3** is a lateral view of a brake assembly comprising a braking member actuating assembly installed on a vehicle as part of a brake system according to another exemplary embodiment of the present invention; and
**Figure 4** is a cross-sectional view of a further variant of a braking member actuating assembly.

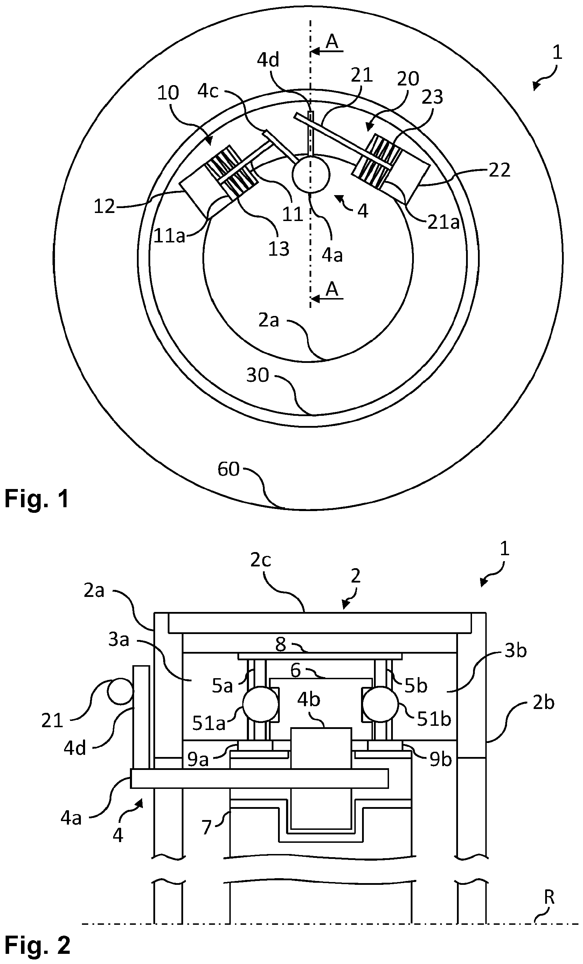

**Figure 1** shows a lateral view of a brake assembly 1 comprising a braking member actuating assembly 4 installed on a vehicle as part of a brake system according to an exemplary embodiment of the present invention. The brake assembly 1 comprises a first brake disc 2a and a second brake disc 2b **(****Figure 2****)** opposed to each other as brake members rotationally supported about a rotational axis R **(****Figure 2****).** The first brake disc 2a and the second brake disc 2b are attached to a wheel rim 30 supporting a tire 60. The braking member actuating assembly 4 is stationary attached to a carrier member (not shown), i.e. is not rotated together with the first brake disc 2a and the second brake disc 2b. The braking member actuating assembly 4 comprises a driving member 4a rotatably supported about a driving member rotational axis extending in parallel to the rotational axis R. The driving member 4a extends as a shaft in a space within the wheel rim 30 along the driving member rotational axis. Further, the braking member actuating assembly comprises a first driving member driving lever 4c and a second driving member driving lever 4d in a constant positional relationship to each other. The first driving member driving lever 4c and the second driving member driving lever 4d are integrally formed with the driving member 4a such that the respective driving member driving lever rotational axes are coaxially arranged with the driving member rotational axis. In other embodiments, the first driving member driving lever 4c and/or the second driving member driving lever 4d may be separate members attached to the driving member 4a instead of being integrally formed therewith and/or the respective driving member driving lever rotational axes may be offset from the driving member rotational axis. Here, the first driving member driving lever 4c and the second driving member driving lever 4d extend radially from the driving member 4a to form an acute angle therebetween.

To rotate the driving member 4a about the driving member rotational axis by the first driving member driving lever 4c, the first driving member driving lever 4c is actuatable by a first driving member driving lever actuating assembly 10, here a piston actuator. The first driving member driving lever actuating assembly 10 as piston actuator comprises a first driving member driving lever actuator piston 11 as first driving member driving lever actuator extending in a translational movement direction to actuate the first driving member driving lever 4c. The first driving member driving lever actuator piston 11 comprises a first driving member driving lever actuator piston area 11a extending circumferentially in a radial direction with respect to the translational movement direction of the first driving member driving lever actuator piston 11 or the axial extension of the first driving member driving lever actuator piston 11, respectively. The first driving member driving lever actuator piston area 11a guides the first driving member driving lever actuator piston 11 within a first driving member driving lever actuator piston cylinder 12 of the first driving member driving lever actuating assembly 10 in the translational movement direction. Further, the first driving member driving lever actuator piston area 11a separates the interior volume of the first driving member driving lever actuator piston cylinder 12 into a first volume surrounding the first driving member driving lever actuator piston 11 to the extent received by the first driving member driving lever actuator piston cylinder 12 and a second volume between the surface of the first driving member driving lever actuator piston area 11a facing away from the first driving member driving lever actuator piston 11 in the translational movement direction. The first driving member driving lever actuating assembly 10 further comprises a first driving member driving lever actuator spring member 13 as first driving member driving lever actuator biasing member. In the exemplary embodiment, the first driving member driving lever actuator spring member 13 is a compression spring arranged in the first volume and acting in the translational movement direction to bias the first driving member driving lever actuator piston 11 in a retracted position, in which the end of the first driving member driving lever actuator piston 11 opposed to the first driving member driving lever actuator piston area 11a in the translational movement direction is closer to the first driving member driving lever actuator piston cylinder 12 as in an extended position. The end of the first driving member driving lever actuator piston 11 opposed to the first driving member driving lever actuator piston area 11a in the translational movement direction is hinged to the first driving member driving lever 4c.

To rotate the driving member 4a about the driving member rotational axis by the second driving member driving lever 4d, the second driving member driving lever 4d is actuatable by a second driving member driving lever actuating assembly 20, here also configured as piston actuator. The functional and constructive principles of the first driving member driving lever actuating assembly 10 also apply on the second driving member driving lever actuating assembly 20. Accordingly, the second driving member driving lever actuating assembly 20 comprises a second driving member driving lever actuator piston 21 with a second driving member driving lever actuator piston area 21a to be guided in a second driving member driving lever actuator piston cylinder 22 and a first driving member driving lever actuator spring member 23 as second driving member driving lever actuator biasing member. The description of the respective components of the first driving member driving lever actuating assembly 10 also applies to the respective components of the second driving member driving lever actuating assembly 20 to the extent not described otherwise or contrary to given explanations. For example, as exemplary variant, the second driving member driving lever actuator piston 21 is not hinged to the second driving member driving lever 4d but comprises a catch to engage with the second driving member driving lever 4d.

The second driving member driving lever actuating assembly 20 is arranged opposed to the first driving member driving lever actuating assembly 10 with respect to the first driving member driving lever 4c and the second driving member driving lever 4d, respectively. In the words, the translational movement directions of the first driving member driving lever actuator piston 11 and the second driving member driving lever actuator piston 21 are intersecting each other, here with an angle of less than 180° open to the rotational axis R.

In operation, with a braking direction corresponding to a clockwise rotation of the driving member 4a, a braking operation by the first driving member driving lever actuating assembly 10 is executed by pressurizing the second volume of the first driving member driving lever actuator piston cylinder 12 up to a resulting force on the first driving member driving lever actuator piston area 11a exceeding the counter force by the first driving member driving lever actuator spring member 13. Accordingly, the first driving member driving lever actuator piston 11 is moved in the extracted position, thereby pushing the first driving member driving lever 4c away from the first driving member driving lever actuator piston cylinder 12 to rotate the driving member 4a in the braking direction, i.e. here clockwise. The described configuration corresponds to an active braking concept.

With respect to the second driving member driving lever actuating assembly 20, rotating the driving member 4a in the braking direction is accomplished by pulling the second driving member driving lever 4d clockwise towards the second driving member driving lever actuator piston cylinder 22 by the second driving member driving lever actuator spring member 23 with resulting force of a pressurization of the second volume of the second driving member driving lever actuator piston cylinder 22 being below the counter force of the second driving member driving lever actuator spring member 23. The described configuration corresponds to a passive braking concept.

To release an applied braking force on the brake discs 2a, 2b the driving member 4a has to be rotated in a rotational direction opposite to the braking direction, i.e. a release direction, here a counterclockwise rotational direction as opposite to the clockwise braking direction. To rotate the driving member 4a in the release direction to release an applied braking force by the first driving member driving lever actuating assembly 10, the pressure in the second volume is reduced at least up to a resulting force below the counter force of the first driving member driving lever actuator spring member 13. Accordingly, the first driving member driving lever actuator spring member 13 can expand to move the first driving member driving lever actuator piston 11 in the retracted position. The first driving member driving lever 4c is thereby pulled by the first driving member driving lever actuator piston 11 towards the first driving member driving lever actuator piston cylinder 12 to rotate the driving member 4a in the release direction, i.e. here counterclockwise.

With respect to the second driving member driving lever actuating assembly 20, rotating the driving member 4a in the release direction is accomplished by pushing the second driving member driving lever 4d counterclockwise away from the second driving member driving lever actuator piston cylinder 22 by pressurizing the second volume of the second driving member driving lever actuator piston cylinder 22 up to a resulting force on the second driving member driving lever actuator piston area 21a exceeding the counter force by the second driving member driving lever actuator spring member 23. Accordingly, the second driving member driving lever actuator piston 21 is moved in the extracted position, thereby pushing the second driving member driving lever 4d away from the second driving member driving lever actuator piston cylinder 22 to rotate the driving member 4a in the release direction, i.e. here counterclockwise.

The first driving member driving lever actuating assembly 10 may be applied for service brake operations, while the second driving member driving lever actuating assembly 20 may be applied for parking brake operations. However, the first driving member driving lever actuating assembly 10 and the second driving member driving lever actuating assembly 20 may be used simultaneously to jointly support a braking and/or release operation and/or in series. For example, the latter may provide a parking brake operation with the first driving member driving lever actuating assembly 10 executing a braking operation and the second driving member driving lever actuating assembly 20 is only actuated to provide an continued further movement of the driving member 4a in the braking direction and/or to hold the driving member 4a in the respective braking position.

**Figure 2** shows a cross-sectional view of the brake assembly 1 according to Figure 1 with respect to a view A-A as indicated in Figure 1. The exemplary brake assembly 1 comprises a brake disc assembly 2 as brake member assembly, comprising the first brake disc 2a and the second brake disc 2b. As per the above, the first brake disc 2a and the second brake disc 2b are rotationally supported about the rotational axis R and connected to each other by a connecting member 2c to rotate together about the rotational axis R. In the exemplary embodiment, the connecting member 2c is a continuous ring member circumferentially extending around the outer circumference of the first brake disc 2a and second brake disc 2b in a space therebetween in the axial direction with respect to rotational axis R. Accordingly, the connecting member 2c provides an outer circumferential cover of the brake disc assembly 2 capable of stiffening the brake disc assembly 2 and/or protecting components between the first brake disc 2a and the second brake disc 2b against environmental impacts from outside the coverage by the first brake disc 2a, the second brake disc 2b and the connecting member 2c. However, in other embodiments, the connecting member 2c may be discontinuous in terms of providing openings, e.g. for an accessibility of components inside such discontinuous coverage and/or for ventilation, or the connecting member may be comprised of a plurality of separate connecting members. In other embodiments, the connecting member 2c may, alternatively or in addition, be arranged at an inner circumference of the first brake disc 2a and the second brake disc 2b. The connecting member 2c is connected to the first brake disc 2a and the second brake disc 2b by being firmly bonded thereto. In alternative embodiments, the connecting member may be connected to the first brake disc 2a and the second brake disc 2b by a force-fit connection or integrally formed with the first brake disc 2a and the second brake disc 2b.

The brake assembly 1 further comprises a first brake pad 3a as first braking member assigned to the first brake disc 2a to apply a braking force thereon and a second brake pad 3b as second braking member assigned to the second brake disc 2b to apply a braking force thereon. Each of the first and second brake pads 3a, 3b is arranged to provide a braking surface extending in a radial direction with respect to the rotational axis R and facing in inner radial surface of the respective first and second brake discs 2a, 2b respectively assigned thereto. In the exemplary embodiment, the first and second brake pads 3a, 3b are stationary with respect to rotational movement relative to the first and second brake discs 2a, 2b, but axially moveable with respect to the rotational axis R. Accordingly, when the first brake pad 3a is axially moved towards the first brake disc 2a, after an initial contact, the first brake pad 3a applies a braking force on the first brake disc. In turn, when the first brake pad 3a is axially moved away from the first brake disc 2a, an applied braking force is released. The same applies for the second brake pad 3b with respect to the second brake disc 2b. In the exemplary embodiment, the first and second brake pads 3a, 3b are configured to only partially extend over a circumferential direction with respect to the rotational axis R. However, in alternative embodiments, the first brake pad 3a and/or the second brake pad 3b may be configured as annular member extending over the whole circumference of the first brake disc 2a and/or the second brake disc 2b, preferably coaxially to the rotational axis R.

To apply a braking force on the first and second brake discs 2a, 2b due to an axial movement of the first and second brake pads 3a, 3b, the brake assembly 1 comprises a brake member transmission assembly. The brake member transmission assembly in the exemplary embodiment comprises a first ball retainer 5a with a first ball 51b retained therein, a second ball retainer 5b with a second ball 51b retained therein, and a brake member transmission 6 arranged between the first ball retainer 5a and the second ball retainer 5b in the axial direction with respect to the rotational axis R. The brake member transmission 6 provides a first ball track on a radial surface facing the ball 51a and a second ball track on a radial surface facing the ball 51b. The first ball retainer 5a, the second ball retainer 5b and the brake member transmission 6 are ring-shaped and extend around the rotational axis R coaxially thereto. Due to the annular arrangement, the first ball retainer 5a and/or the second ball retainer 5b may also comprise a plurality of respective first and second balls, 51a, 51b. Accordingly, the brake member transmission 6 may provide a respective length of the first and second ball tracks in the circumferential direction or may provide a respective plurality of first and second ball tracks. In the exemplary embodiment, the brake member transmission assembly provides a ball-ramp mechanism with the brake member transmission 6 being rotationally driven about the rotational axis R to move the first ball 51a and the second ball 51b in the axial direction in accordance with the actual depth of the respective ball track in the axial direction. Accordingly, the first ball 51a and the second ball 51b are retained in respectively stationary first and second ball retainers 5a, 5b with respect to a rotational movement. The first ball 51a and the second ball 51b are retained in the first and second ball retainers 5a, 5b to be movable in the axial direction. In other embodiments, the axial movement of the first and second balls 51a, 51b may, alternatively or in addition, be provided by the respective first and/or second ball retainers being axially moveable.

To move the first and second ball tracks relatively to the first and second balls 51a, 51b, the brake assembly 1 comprises the braking member actuating assembly 4. The driving member 4a of the braking member actuating assembly 4 extends in the axial direction in parallel to the rotational axis R from an outside of the brake disc assembly 2, here from an outside of the radial surface of the first brake disc 2a facing away from the second brake disc 2b, into the axial space provided between the first brake disc 2a and the second brake disc 2b. The driving member 4a comprises a driving member transmission 4b, here, a spur gear extending circumferentially in the radial direction with the teeth arranged on the outer circumference of the spur gear, i.e. on a circumferential axial surface thereof. The driving member transmission 4b is arranged at a portion of the driving member 4a extending inside the brake disc assembly 2, i.e. in the space between the first brake disc 2a and the second brake disc 2b. The driving member transmission 4b is thereby positioned such that the teeth of the spur gear mesh with corresponding teeth of the brake member transmission 6 facing the teeth of the spur gear. Consequently, the brake member transmission 6 is rotated about the rotational axis R, if driven by the driving member transmission 4b due to a rotational movement of the driving member 4a.

The driving member 4a comprising the driving member transmission 4b is rotatably supported within a driving member carrier 7 partially enclosing the driving member 4a and the driving member transmission 4b in the axial direction with an opening to allow the driving member transmission 4b to drive the brake member transmission 6. To protect the driving transmission 4b and the brake member transmission assembly from environmental impacts, such as brake dust or the like, the brake assembly 1 comprises a first transmission protection portion 8 and two second protection portions 9a, 9b. The first transmission protection portion 8 is a ring member with its circumferential extension arranged between the first brake pad 3a and the second brake pad 3b in the axial direction to allow the brake member transmission assembly to be circumferentially enclosed by the first transmission protection portion 8 from an outer circumference facing away from the rotational axis R. The second transmission protection portions 9a, 9b are also configured as annular members extending circumferentially about the rotational axis R. The one second transmission portion 9a is disposed between the driving member carrier 7 and the first brake pad 3a. The other second transmission portion 9b is disposed between the driving member carrier 7 and the second brake pad 3b. Accordingly, the second transmission protection portions 9a, 9b allow the brake member transmission assembly to be circumferentially sealed by the second transmission protection portions 9a, 9b from an inner circumference facing towards the rotational axis R.

In operation, to apply a braking force on the first and second brake disc 2a, 2b, when the second driving member driving lever actuator piston 21 pulls the second driving member driving lever 4d in the braking direction as previously described, the driving member 4a and therefore the driving member transmission 4b affixed thereto rotates in the braking direction. Consequently the brake member transmission 6 is driven by the driving member transmission 4b in the braking direction to provide a relative rotational movement between the brake member transmission 6, specifically the respective first and second ball tracks, and the first and second balls 51a, 51b and the first and second ball retainers 5a, 5b, respectively. As the depths of the first and second ball tracks decreases with an increasing rational movement in the braking direction, the first and second balls 51a, 51b are axially moved towards that respectively assigned first and second brake pads 3a, 3b. The first and second brake pads 3a, 3b are thereby axially moved towards the respectively assigned first and second brake pads to apply a braking force thereon.

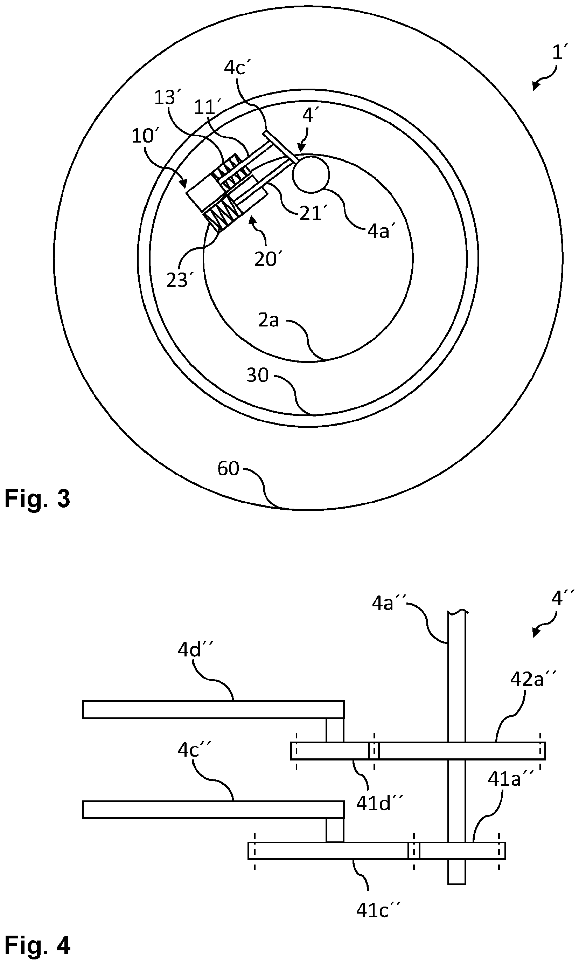

**Figure** 3 shows a lateral view of a brake assembly 1' comprising a braking member actuating assembly installed on a vehicle as part of a brake system according to another exemplary embodiment of the present invention. The braking assembly 1' differs from the braking assembly 1 by a braking member actuating assembly 4' with respect to its actuation by a first driving member driving lever actuating assembly 10' and a second driving member driving lever actuating assembly 20'. Other functional principles as previously described with respect to the brake assembly 1 are not affected by the differences and therefore also applicable on the brake assembly 1'.

In this embodiment, a driving member 4a'of the braking member actuating assembly 4' is only driven by one first driving member driving lever 4c' as driving member driving lever. Accordingly, the first driving member driving lever actuating assembly 10' and the second driving member driving lever actuating assembly 20' are actuating the same first driving member lever 4c'. The first driving member driving lever actuating assembly 10' and the second driving member driving lever actuating assembly 20' are arranged on the same radially extending side of the first driving member driving lever 4c' but in different radial positions along the first driving member driving lever 4c' extending radially. The radial distance between the second driving member driving lever actuating assembly 20' and the driving member driving lever rotational axis is less than the radial distance between the first driving member driving lever actuating assembly 10' and the driving member driving lever rotational axis.

The first driving member driving lever actuating assembly 10' is configured as the first driving member driving lever actuating assembly 10, i.e. provides an active brake concept with a braking direction corresponding to a clockwise rotation of the driving member 4a'. However, as the second driving member driving lever actuating assembly 20' is disposed on the same radially extending side of the first driving member driving lever 4c', the second driving member driving lever actuating assembly 20' is configured differently with respect to the second driving member driving lever actuating assembly 20 to provide a passive braking concept. To rotate the first driving member driving lever 4c'and therefore the driving member 4a' in the braking direction, the second driving member driving lever actuator piston 21' has to be moved in an extended position to push the first driving member driving lever 4c' in the respective braking direction. To apply the passive braking concept, a second driving member driving lever actuator spring member 23', here a compression spring, is therefore disposed in the second volume of the second driving member driving lever actuator piston cylinder 22. Consequently, the first volume of the second driving member driving lever actuator piston cylinder 22 has to be pressurized up to a resulting force exceeding the counter force of the compression spring to move the second driving member driving lever actuator piston 21' in the retracted position and thereby the first driving member driving lever 4c'and therefore the driving member 4a' in the release direction.

**Figure 4** shows a cross-sectional view of a further variant of a braking member actuating assembly 4". In this variant, a first driving member driving lever 4c" is operatively connected to a driving member 4a" via a first driving member driving lever gear 41c" meshing with a first driving member gear 41a". Similarly, a second driving member driving lever 4d" is operatively connected to the driving member 4a" via a second driving member driving lever gear 41d" meshing with a second driving member gear 42a". The pairings of the first driving member driving lever gear 41c" and the first driving member gear 41a" as well as the second driving member driving lever gear 41d" and the second driving member gear 42a" are selected to provide a predetermined transmission ratio. In the exemplary embodiment, the transmission ratio from the first driving member driving lever gear 41c" on the driving member 4a" via the first driving member gear 41a" is less than the transmission ratio from the second driving member driving lever gear 41d" on the driving member 4a" via the second driving member gear 42a". In such configuration the driving member driving lever rotational axis differs from the driving member rotational axis. In the exemplary embodiment, the driving member driving lever rotational axis is offset from but extend in parallel to the driving member rotational axis

The invention has been described with respect to an exemplary embodiments. However, the invention is not limited to the exemplary embodiments.

### LIST OF REFERENCE SIGNS

- 1, 1': brake assembly
- 2: brake disc assembly (brake member assembly)
- 2a: first brake disc (first brake member)
- 2b: second brake disc (second brake member)
- 2c: connecting member
- 3a: first brake pad (first braking member)
- 3b: second brake pad (second braking member)
- 4, 4', 4": braking member actuating assembly
- 4a, 4a', 4a": driving member (braking member actuating assembly)
- 4b: driving member transmission (braking member actuating assembly)
- 4c, 4c', 4c": first driving member driving lever
- 4d, 4d": second driving member driving lever
- 5a: first ball retainer (brake member transmission assembly)
- 5b: second ball retainer (brake member transmission assembly)
- 6: brake member transmission (brake member transmission assembly)
- 7: driving member carrier
- 8: first transmission protection portion
- 9a, 9b: second transmission protection portion
- 10, 10': first driving member driving lever actuating assembly
- 11, 11': first driving member driving lever actuator piston (first driving member driving lever actuator)
- 11a: first driving member driving lever actuator piston area
- 12: first driving member driving lever actuator piston cylinder
- 13, 13': first driving member driving lever actuator spring member (first driving member driving lever actuator biasing member)
- 20, 20': second driving member driving lever actuating assembly
- 21, 21': second driving member driving lever actuator piston (second driving member driving lever actuator)
- 21a: second driving member driving lever actuator piston area
- 22: second driving member driving lever actuator piston cylinder
- 23, 23': second driving member driving lever actuator spring member (second driving member driving lever actuator biasing member)
- 30: wheel rim
- 41a": first driving member gear (first driving member transmission receiving member)
- 42a": second driving member gear (second driving member transmission receiving member)
- 41c": first driving member driving lever gear (first driving member driving lever transmission member)
- 41d": second driving member driving lever gear (second driving member driving lever transmission member)
- 51a: first ball (brake member transmission assembly)
- 51b: second ball (brake member transmission assembly)
- 60: tire
- R: rotational axis

## Claims

1. Braking member actuating assembly (4, 4', 4") for actuating at least one braking member (3a, 3b) to apply a braking force on at least one brake member (2a, 2b), comprising:
at least one driving member (4a, 4a', 4a") configured to actuate the at least one braking member (3a, 3b), and
at least one driving member driving lever (4c, 4c', 4c", 4d, 4d") operatively connected to or operatively engageable with the at least one driving member (4a, 4a', 4a") to drive the at least one driving member (4a, 4a', 4a"),
wherein the braking member actuation assembly (4, 4', 4") is configured to transfer a rotational movement of the at least one driving member driving lever (4c, 4c', 4c", 4d, 4d") about a respective driving member driving lever rotational axis into a rotational movement of the at least one driving member (4a, 4a', 4a") about a respective driving member rotational axis.

2. The braking member actuating assembly (4, 4', 4") according to claim 1, wherein the at least one driving member (4a, 4a', 4a") comprises a rod, preferably extending in parallel to, more preferably coaxially with the driving member rotational axis, and wherein the at least one driving member (4a, 4a', 4a") comprises or is operatively connected to at least one driving member transmission (4b), preferably a gear, a wedge or a cam, to convert the rotational movement of the at least one driving member (4a, 4a', 4a") into an actuation of the at least one braking member (3a, 3b).

3. The braking member actuating assembly (4") according to claim 1 or 2, wherein the at least one driving member driving lever (4c", 4d") comprises at least one driving member driving lever transmission member (41c", 41d"), preferably at least one driving member driving lever gear (41c", 41d"), and the at least one driving member (4a") comprises at least one driving member transmission receiving member (41a", 42a"), preferably at least one driving member gear (41a", 42a") in accordance with a predetermined transmission ratio.

4. The braking member actuating assembly (4, 4', 4") according to any one of the preceding claims, wherein the braking member actuating assembly (4, 4', 4") further comprises at least one driving member driving lever actuating assembly (10, 10', 20, 20') configured to drive the at least one driving member driving lever (4c, 4c', 4c", 4d, 4d") about the driving member driving lever rotational axis.

5. The braking member actuating assembly (4, 4', 4") according to claim 4, wherein the at least one driving member driving lever actuating assembly (10, 10', 20, 20') comprises a piston actuator, comprising at least one driving member driving lever actuator piston (11, 11', 21, 21') with one end configured to drive the at least one driving member driving lever (4c, 4c', 4c", 4d, 4d") and the other end forming a driving member driving lever actuator piston area (11a, 21a) configured to be guided in a driving member driving lever actuator piston cylinder (12, 22).

6. The braking member actuating assembly (4, 4', 4") according to claim 5, wherein the at least one driving member driving lever actuating assembly (10, 10', 20, 20') comprises at least one driving member driving lever actuator biasing member (13, 13', 23, 23') configured to bias the at least one driving member driving lever actuator piston (11, 11', 21, 21') in a retracted position decreasing the distance between the driving member driving lever actuator piston cylinder (12, 22) of the at least one driving member driving lever actuating assembly (10, 10', 20, 20') and the at least one driving member driving lever (4c, 4c', 4c", 4d, 4d") or in an extended position increasing the distance between the driving member driving lever actuator piston cylinder (12, 22) of the at least one driving member driving lever actuating assembly (10, 10', 20, 20') and the at least one driving member driving lever (4c, 4c', 4c", 4d, 4d").

7. The braking member actuating assembly (4, 4', 4") according to any one of the claims 4 to 6, wherein the braking member actuating assembly (4, 4', 4") comprises at least one first driving member driving lever actuating assembly (10, 10') and at least one second driving member driving lever actuating assembly (20, 20').

8. The braking member actuating assembly (4') according to claim 7, wherein both of the at least one first driving member driving lever actuating assembly (10') and the at least one second driving member driving lever actuating assembly (20') drive the at least one driving member driving lever (4c'), preferably each of which being operatively engageable with or operatively connected to the at least one driving member driving lever (4c') in different positions along the at least one driving member driving lever (4c') and/or being arranged substantially on different sides of the at least one driving member driving lever (4c').

9. The braking member actuating assembly (4, 4") according to claim 7, wherein the braking member actuating assembly (4, 4") comprises
- at least one first driving member driving lever (4c, 4c") operatively connected to or operatively engageable with the at least one driving member (4a, 4a") and configured to be driven by the at least one first driving member driving lever actuating assembly (10), and
- at least one second driving member driving lever (4d, 4d") operatively connected to or operatively engageable with the at least one driving member (4a, 4a") and configured to be driven by the at least one second driving member driving lever actuating assembly (20),
preferably with the at least one first driving member driving lever (4c, 4c") and the at least one second driving member driving lever (4d, 4d") forming an angle equal to or less than 180°, in particular an acute angle, therebetween with the at least one first driving member driving lever actuating assembly (10) and with the at least one second driving member driving lever actuating assembly (20) being substantially arranged on opposite side outside the angle formed by the at least one first driving member driving lever (4c, 4c") and the at least one second driving member driving lever (4d, 4d"), and/or preferably with the at least one first driving member driving lever actuating assembly (10) and the at least one second driving member driving lever actuating assembly (20) being operatively engageable with the at least one first driving member driving lever (4c, 4c") and the at least one second driving member driving lever (4d, 4d") in different radial distances from the driving member rotational axis.

10. The braking member actuating assembly (4, 4") according to claim 9, wherein the at least one first driving member driving lever (4c, 4c") and the at least one second driving member driving lever (4d, 4d") are operatively engaged with the at least one driving member (4a, 4a") in a constant positional relationship to each other or relatively moveable with respect to each other.

11. The braking member actuating assembly (4, 4', 4") according to any one of the claims 8 to 10, wherein the at least one first driving member driving lever actuating assembly (10, 10') is configured to drive the at least one driving member driving lever (4c') according to claim 8 or the at least one first driving member driving lever (4c, 4c") according to claim 9 in a braking direction when energized, preferably by pushing or pulling the at least one driving member driving lever (4c') according to claim 8 or the at least one first driving member driving lever (4c, 4c") according to claim 9, and the at least one second driving member driving lever actuating assembly (20, 20') is configured to drive the at least one driving member driving lever (4c') according to claim 8 or the at least one second driving member driving lever (4d, 4d") according to claim 9 in a braking direction when de-energized, preferably by pulling or pushing the at least one driving member driving lever (4c') according to claim 8 or the at least one second driving member driving lever (4d, 4d") according to claim 9.

12. The braking member actuating assembly (4, 4', 4") according to any one of the claims 7 to 11, wherein the transmission ratio of the at least one first driving member driving lever actuating assembly (10, 10') on the at least one driving member (4a, 4a', 4a") is different from the transmission ratio of the at least one second driving member driving lever actuating assembly (20, 20') on the at least one driving member (4a, 4a', 4a"), preferably the transmission ratio by the at least one first driving member driving lever actuating assembly (10, 10') on the at least one driving member (4a, 4a', 4a") is less than the transmission ratio of the at least one second driving member driving lever actuating assembly (20, 20') on the at least one driving member (4a, 4a', 4a").

13. Brake assembly (1, 1'), comprising:
at least one brake member (2a, 2b) rotationally supported about a rotational axis (R) and connected to a wheel rim (30), which extends circumferentially around the at least one brake element (2a, 2b) about the rotational axis (R),
at least one braking member (3a, 3b) to apply a braking force on at least one brake element (2a, 2b), and
at least one braking member actuating assembly (4, 4', 4") according to any one of the claims 1 to 12,
wherein the at least one driving member (4a, 4a', 4a") and/or the at least one driving member driving lever (4c, 4c', 4c", 4d, 4d") is/are arranged within a radial distance with respect to the rotational axis (R) which is substantially equal or less than the radius of the wheel rim (30), preferably in accordance with the outer diameter of the wheel rim (30), more preferably in accordance with the inner diameter of the wheel rim (30).

14. The brake assembly (1, 1') according to claim 13, wherein the braking member actuating assembly (4, 4', 4") comprises the at least one driving member driving lever actuating assembly (10, 10', 20, 20') according to any one of the claims 4 to 12, and wherein the at least one driving member driving lever actuating assembly (10, 10', 20, 20') is arranged within a radial distance with respect to the rotational axis (R) which is substantially equal to or less than the radius of the wheel rim (30), preferably in accordance with the outer diameter of the wheel rim (30), more preferably in accordance with the inner radius of the wheel rim (30).

15. The brake assembly (1, 1') according to claim 13 or 14, wherein the braking member actuating assembly (4, 4', 4") comprises the at least one driving member driving lever actuating assembly (10, 10', 20, 20') according to any one of the claims 4 to 12, and wherein the radial extension of the at least one driving member driving lever (4c, 4c', 4c", 4d, 4d") with respect to the driving member driving lever rotational axis and the extension of the at least one driving member driving lever actuating assembly (10, 10', 20, 20') in the actuation direction to drive the at least one driving member driving lever (4c, 4c', 4c", 4d, 4d") form an angle of equal to or less than 90°, preferably equal or less than 70°, more preferably equal to or less than 50°, with the angle being opened towards the rotational axis (R).

16. The brake assembly (1, 1') according to any one of the claims 13 to 15, wherein the braking member actuating assembly (4, 4', 4") comprises the at least one first driving member driving lever actuating assembly (10, 10') and the at least one second driving member driving lever actuating assembly (20, 20') according to any one of the claims 7 to 12, wherein the at least one first driving member driving lever actuating assembly (10, 10') is configured to provide a service brake operation and the at least one second driving member driving lever actuating assembly (20, 20') is configured to provide a parking brake operation.

17. Vehicle comprising a braking member actuating assembly (4, 4', 4") according to any one of the claims 1 to 12 and/or a brake assembly (1, 1') according to one of the claims 13 to 16, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.
